# FASCICULE DE BREVET EUROPEEN

(11) **EP 4 311 647 B1**
(45) Date de publication et mention de la délivrance du brevet: **05.03.2025**
(21) Numéro de dépôt: 23187211.0
(22) Date de dépôt: 24.07.2023
(51) Int. Cl.: B29C 43/24, B29C 43/52, B29C 48/05, D06N 7/00, B60N 3/04

(54) **PROCÉDÉ DE FABRICATION D'UN TAPIS DE SOL DE VÉHICULE AUTOMOBILE**
VERFAHREN ZUR HERSTELLUNG EINER BODENMATTE FÜR KRAFTFAHRZEUGE
METHOD FOR PRODUCING A MOTOR VEHICLE FLOOR MAT

(30) Priorité: 25.07.2022 FR 2207623
(43) Date de publication de la demande: 31.01.2024
(73) Titulaire: TREVES PRODUCTS, SERVICES & INNOVATION, 75008 Paris (FR)
(72) Inventeur: PENIT, Christophe, 75008 Paris (FR); MERIAUX, Loïc, 75008 Paris (FR); LULLIER, Sosthène, 75008 Paris (FR)
(74) Mandataire: Sayettat, Julien Christian

(56) Documents cités:
- US-A1- 2006 090 832
- US-A1- 2012 064 281
- US-A1- 2015 118 437

## Description

L'invention concerne un procédé de fabrication d'un tapis de sol de véhicule automobile et un tapis réalisé par un tel procédé.

Il est connu de mettre en œuvre un procédé de fabrication d'un tapis de sol de véhicule automobile, ledit procédé comprenant les étapes suivantes :
- prévoir une nappe de support à base de fibres de polyester thermoplastique et/ou de polyester thermoplastique modifié,
- piquer des boucles de fils à base de polyester thermoplastique dans ladite nappe de manière à réaliser une nappe tuftée,
- déposer en face d'envers de ladite nappe tuftée une couche de fixation desdites boucles à ladite nappe, ladite couche étant à base de polyester thermoplastique modifié - pouvant être dénommé également « copolyester » - de manière à présenter un point de fusion moindre que celui du polyester, ladite couche étant déposée par extrusion suivie d'un calandrage.

On réalise ainsi un tapis tufté intégralement à base de polyester thermoplastique, modifié ou non, ce qui permet son recyclage aisé en fin de vie du véhicule par fusion pour obtenir par exemple des granulats destinés à l'injection, ou encore des fibres.

Par ailleurs, les différentes formes de polyester utilisées pour réaliser le tapis peuvent provenir du recyclage, par exemple de bouteilles en plastique, ce qui est favorable à la protection de l'environnement.

Cependant, la demanderesse a observé que la résistance à l'abrasion d'un tel tapis ne satisfait pas toujours aux exigences des constructeurs automobiles, et ceci malgré la présence de la couche de fixation, notamment quand les polyesters utilisés sont issus de recyclage.

Enfin, un tapis tufté utilisé pour l'atténuation du son dans une cabine passagers d'un véhicule est décrit dans le document US 2012/064281 A1, le tapis tufté comprenant: une couche de poils configurée pour être couplée à la cabine via une ou plusieurs autres couches, la couche de poils ayant un fil de filaments continus gonflants (BCF); dans lequel le fil BCF comprend au moins un matériau de fil choisi parmi (i) un matériau de fil de polypropylène (PP) avec une ténacité comprise entre environ 2,6 cN/dtex et environ 3,2 cN/dtex à un allongement d'environ 50 % à environ 70 %, et (ii) un matériau de fil de polyéthylène téréphtalate (PET) avec une ténacité comprise entre environ 2,6 cN/dtex et environ 3,4 cN/dtex à un allongement d'environ 20 % à environ 40 %.

L'invention a pour but de pallier cet inconvénient.

A cet effet, et selon un premier aspect, l'invention propose un procédé de fabrication d'un tapis de sol de véhicule automobile, ledit procédé comprenant les étapes suivantes :
- prévoir une nappe de support à base de fibres de polyester thermoplastique et/ou de polyester thermoplastique modifié,
- piquer des boucles de fils à base de polyester thermoplastique sur ladite nappe de manière à réaliser une nappe tuftée,
- déposer en face d'envers de ladite nappe tuftée une couche de fixation desdites boucles à ladite nappe, ladite couche étant à base de polyester thermoplastique modifié de manière à présenter un point de fusion moindre que celui du polyester de ladite nappe de support, ladite couche étant déposée par extrusion suivie d'un calandrage,
sachant que, préalablement au dépôt de ladite couche de fixation, ladite nappe tuftée est chauffée sur ladite face d'envers à température de fusion du polyester, de manière à réaliser une fusion de la partie desdites boucles étant en contact avec ladite nappe pour réaliser leur fixation.

On précise ici que la face d'envers de la nappe tuftée est celle qui est opposée à la face visible par un occupant du véhicule.

Avec l'agencement proposé, de par leur nature chimique commune à base de polyester, les boucles et la nappe de support se fixent entre elles de façon très efficace, ce qui permet, comme on le verra plus loin, d'apporter un renforcement de la fixation desdites boucles sur ladite nappe.

Selon un deuxième aspect, l'invention propose un tapis réalisé par un tel procédé.

D'autres particularités et avantages de l'invention apparaîtront dans la description qui suit, faite en référence aux figures jointes, dans lesquelles :

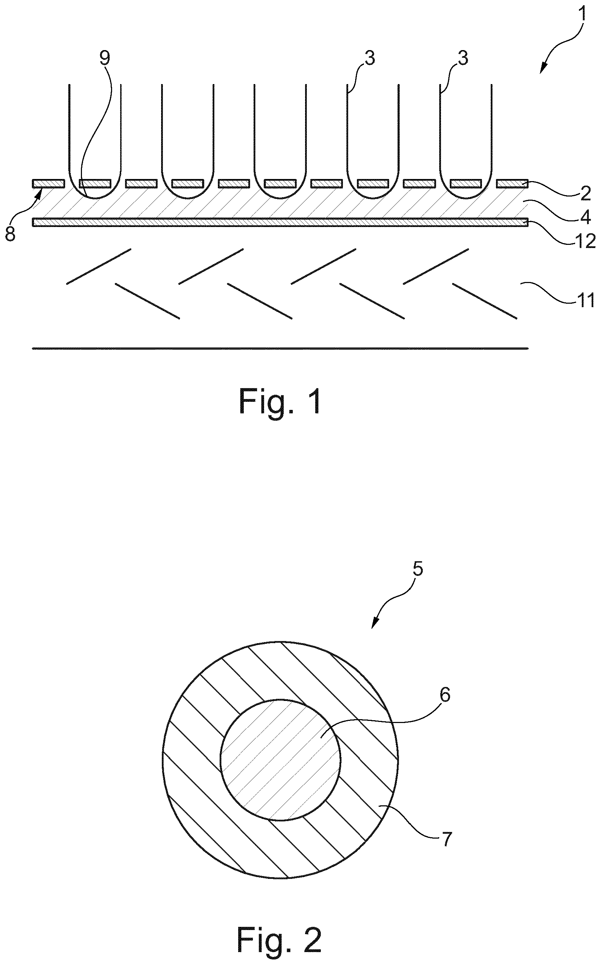

[Fig.1] est une vue schématique partielle en coupe d'un tapis selon une réalisation,
[Fig.2] est une section schématique d'une fibre bi-composant.

En référence aux figures, on décrit un procédé de fabrication d'un tapis 1 de sol de véhicule automobile, ledit procédé comprenant les étapes suivantes :
- prévoir une nappe de support 2 à base de fibres de polyester thermoplastique et/ou de polyester thermoplastique modifié,
- piquer des boucles 3 de fils à base de polyester thermoplastique sur ladite nappe de manière à réaliser une nappe tuftée,
- déposer en face d'envers 8 de ladite nappe tuftée une couche de fixation 4 desdites boucles à ladite nappe, ladite couche étant à base de polyester thermoplastique modifié de manière à présenter un point de fusion moindre que celui du polyester de ladite nappe de support, ladite couche étant déposée par extrusion suivie d'un calandrage,
sachant que, préalablement au dépôt de ladite couche de fixation, ladite nappe tuftée est chauffée sur ladite face d'envers à température de fusion du polyester, de manière à réaliser une fusion de la partie 9 desdites boucles étant en contact avec ladite nappe pour réaliser leur fixation.

Bien entendu, la chauffe de la face d'envers 8 est réalisée pendant la durée juste nécessaire pour réaliser la fixation des boucles 3, ceci en évitant une durée de chauffe excessive susceptible d'occasionner une dégradation de la nappe 2 tuftée

Selon une réalisation, la nappe de support 2 est formée d'un mélange de fibres mono-composant en polyester thermoplastique et de fibres bi-composant 5 dotées d'une âme 6 en polyester thermoplastique et d'une gaine 7 en polyester thermoplastique modifié, de manière à présenter un point de fusion moindre que celui du polyester.

L'utilisation d'un tel mélange permet de réaliser une nappe 2 où la fixation des fibres entre elles se fait par fusion de la gaine 7 des fibres bi-composant 5.

Selon une réalisation, la nappe de support 2 est sous forme de non tissé.

Selon une réalisation, la nappe de support 2 présente une masse surfacique comprise entre 80 et 160 g/m², et plus particulièrement entre 100 et 140 g/m², et plus particulièrement de l'ordre de 120 g/m².

Selon une réalisation, le polyester et/ou le polyester modifié de la nappe de support 2 est à base de polytéréphtalate d'éthylène (PET).

Selon une réalisation, le polyester des boucles 3 est à base de polytéréphtalate d'éthylène (PET).

Selon une réalisation, le polyester modifié de la couche de fixation 4 est à base de polytéréphtalate d'éthylène (PET).

Selon une réalisation, la chauffe de la face d'envers 8 de la nappe 2 tuftée est réalisée par calandrage à chaud, le cylindre disposé en regard de ladite face étant chauffé à température de fusion du polyester.

Selon une réalisation, le procédé comprend en outre les étapes suivantes :
- découper un premier format de nappe 2 tuftée pourvue de sa couche de fixation 4,
- disposer ledit premier format sur un deuxième format de matériau fibreux non tissé 11 - notamment un feutre, notamment aiguilleté - de masse surfacique supérieure à 250 g/m², ladite couche de fixation étant tournée vers ledit deuxième format, ledit matériau non tissé étant formé par un mélange de fibres mono-composant en polyester thermoplastique - notamment en polyéthylène téréphtalate - et de fibres bi-composant 5 dotées d'une âme 6 en polyester thermoplastique - notamment en polyéthylène téréphtalate - et d'une gaine 7 en polyester thermoplastique modifié - notamment en polyéthylène téréphtalate modifié - de manière à présenter un point de fusion moindre que celui du polyester,
- chauffer et presser - notamment entre deux plateaux - l'ensemble à température de fusion du polyester modifié, de manière à fixer ledit deuxième format sur ladite couche de fixation,
- conformer l'ensemble une fois chauffé entre une matrice et un poinçon d'un moule de manière à obtenir un tapis 1 de géométrie tridimensionnelle.

L'intégration d'une couche de matériau non tissé 11 au tapis 1 permet de conférer audit tapis des propriétés améliorées de découplage et d'absorption acoustique.

En outre, de par sa nature thermoplastique, la présence de la couche de matériau non tissé 11 ne fait pas obstacle au recyclage du tapis 1 en fin de vie.

Selon une réalisation, le matériau non tissé 11 comprend entre 10 et 40 % en poids de fibres bi-composant 5.

Selon la réalisation représentée, le procédé comprend en outre, lors du calandrage, la fixation d'un film 12 - par exemple d'épaisseur comprise entre 50 et 150 microns - à température de fusion du polyester modifié, ledit film étant disposé en envers de la couche de fixation 4, ledit film présentant, de façon non représentée, une couche interne en polyester thermoplastique et deux couches externes disposées de part et d'autre de ladite couche interne, lesdites couches externes étant en polyester thermoplastique modifié, de manière à se fixer respectivement sur ladite couche de fixation et sur la couche de matériau non tissé 11.

Le polyester et/ou le polyester modifié constitutifs du film 12 sont notamment à base de polyéthylène téréphtalate.

Selon une autre réalisation non représentée, le procédé comprend une étape de fixation d'un film bicouche comprenant une couche externe en polyester thermoplastique - notamment en polytéréphtalate d'éthylène - et une couche interne en polyester thermoplastique modifié - notamment en polytéréphtalate d'éthylène modifié -, ladite couche interne étant fixée en envers de la couche de matériau non tissé 11.

La mise en place d'un tel film 12 permet d'étanchéifier le tapis, ce qui lui permet d'assurer une isolation acoustique.

En outre, de par sa nature chimique et thermoplastique, l'intégration du film 12 au tapis ne fait pas obstacle au recyclage dudit tapis 1 en fin de vie.

Un test d'abrasion a été réalisé sur deux échantillons de nappe 2 tuftée pourvue de sa couche de fixation 4 :
- un premier échantillon de référence où les boucles 3 n'ont pas été fixées sur ladite nappe par fusion de la gaine 7 des fibres bi-composant 5 de ladite nappe,
- un deuxième échantillon, selon une réalisation de l'invention, où lesdites boucles ont été fixées par une telle fusion.

Le test d'abrasion est celui décrit dans la norme ASTM D 3884-09 en vigueur à la date de dépôt de la demande.

Il est basé sur un principe de roue abrasive rotative actionnée selon une pluralité de cycles sur l'échantillon à tester, la perte de masse de l'échantillon étant mesurée à l'issue de l'abrasion.

A l'issue du test, on observe une moindre perte de masse sur le deuxième échantillon que sur le premier, ce qui permet de valider le renforcement de la résistance à l'abrasion du tapis 1 quand les boucles 3 ont été fixées sur la nappe 2 par fusion de la gaine 7 des fibres bi-composant 5 de ladite nappe.

On décrit enfin un tapis 1 de sol de véhicule automobile réalisé par un tel procédé, les boucles 3 dudit tapis ayant été fixées sur la nappe de support 2 par chauffe de sa face d'envers 8 à température de fusion du polyester, de manière à réaliser une fusion de la partie 9 desdites boucles étant en contact avec ladite nappe pour réaliser leur fixation.

## Revendications

1. Procédé de fabrication d'un tapis (1) de sol de véhicule automobile, ledit procédé comprenant les étapes suivantes :
• prévoir une nappe de support (2) à base de fibres de polyester thermoplastique et/ou de polyester thermoplastique modifié,
• piquer des boucles (3) de fils à base de polyester thermoplastique sur ladite nappe de manière à réaliser une nappe tuftée,
• déposer en face d'envers (8) de ladite nappe tuftée une couche de fixation (4) desdites boucles à ladite nappe, ladite couche étant à base de polyester thermoplastique modifié de manière à présenter un point de fusion moindre que celui du polyester de ladite nappe de support, ladite couche étant déposée par extrusion suivie d'un calandrage,
ledit procédé étant tel que, préalablement au dépôt de ladite couche de fixation, ladite nappe tuftée est chauffée sur ladite face d'envers à température de fusion du polyester, de manière à réaliser une fusion de la partie (9) desdites boucles étant en contact avec ladite nappe pour réaliser leur fixation.

2. Procédé selon la revendication 1, **caractérisé en ce que** la nappe de support (2) est formée d'un mélange de fibres mono-composant en polyester thermoplastique et de fibres bi-composant (5) dotées d'une âme (6) en polyester thermoplastique et d'une gaine (7) en polyester thermoplastique modifié, de manière à présenter un point de fusion moindre que celui du polyester.

3. Procédé selon l'une des revendications précédentes, **caractérisé en ce que** le polyester et/ou le polyester modifié de la nappe de support (2) est à base de polytéréphtalate d'éthylène (PET).

4. Procédé selon l'une quelconque des revendications précédentes, **caractérisé en ce que** le polyester des boucles (3) est à base de polytéréphtalate d'éthylène (PET).

5. Procédé selon l'une quelconque des revendications précédentes, **caractérisé en ce que** le polyester modifié de la couche de fixation (4) est à base de polytéréphtalate d'éthylène (PET).

6. Procédé selon l'une quelconque des revendications précédentes, **caractérisé en ce que** la chauffe de la face d'envers (8) de la nappe (2) tuftée est réalisée par calandrage à chaud, le cylindre disposé en regard de ladite face étant chauffé à température de fusion du polyester.

7. Procédé selon l'une quelconque des revendications précédentes, **caractérisé en ce qu'**il comprend en outre les étapes suivantes :
• découper un premier format de nappe (2) tuftée pourvue de sa couche de fixation (4),
• disposer ledit premier format sur un deuxième format de matériau fibreux non tissé (11) de masse surfacique supérieure à 250 g/m², ladite couche de fixation étant tournée vers ledit deuxième format, ledit matériau non tissé étant formé par un mélange de fibres mono-composant en polyester thermoplastique et de fibres bi-composant (5) dotées d'une âme (6) en polyester thermoplastique et d'une gaine (7) en polyester thermoplastique modifié de manière à présenter un point de fusion moindre que celui du polyester,
• chauffer et presser l'ensemble à température de fusion du polyester modifié, de manière à fixer ledit deuxième format sur ladite couche de fixation,
• conformer l'ensemble une fois chauffé entre une matrice et un poinçon d'un moule de manière à obtenir un tapis (1) de géométrie tridimensionnelle.

8. Procédé selon les revendications 6 et 7, **caractérisé en ce qu'**il comprend en outre, lors du calandrage, la fixation d'un film (12) à température de fusion du polyester modifié, ledit film étant disposé en envers de la couche de fixation (4), ledit film présentant une couche interne en polyester thermoplastique et deux couches externes disposées de part et d'autre de ladite couche interne, lesdites couches externes étant en polyester thermoplastique modifié, de manière à se fixer respectivement sur ladite couche de fixation et sur la couche de matériau non tissé (11).

9. Procédé selon l'une quelconque des revendications 7 ou 8, **caractérisé en ce que** le matériau non tissé (11) comprend entre 10 et 40 % en poids de fibres bi-composant (5).

10. Tapis (1) de sol de véhicule automobile réalisé par un procédé selon l'une quelconque des revendications précédentes, les boucles (3) dudit tapis ayant été fixées sur la nappe de support (2) par chauffe de sa face d'envers (8) à température de fusion du polyester, de manière à réaliser une fusion de la partie (9) desdites boucles étant en contact avec ladite nappe pour réaliser leur fixation.

## Patentansprüche

1. Verfahren zur Herstellung einer Matte (1) für den Boden eines Kraftfahrzeugs, wobei das Verfahren die folgenden Schritte umfasst:
• Vorsehen einer Trägerbahn (2) basierend auf Fasern aus thermoplastischem Polyester und/oder modifiziertem thermoplastischem Polyester,
• Absteppen von Schlingen (3) aus Garn basierend auf thermoplastischem Polyester auf der Bahn, um eine Tuftingbahn zu verwirklichen,
• Aufbringen einer Befestigungsschicht (4) der Schlingen an der Bahn auf der Rückseite (8) der Tuftingbahn, wobei die Schicht auf einem thermoplastischen Polyester basiert, der derart modifiziert wird, dass er einen niedrigeren Schmelzpunkt als der Polyester der Trägerbahn aufweist, wobei die Schicht durch Extrusion mit anschließendem Kalandrieren aufgebracht wird, wobei das Verfahren derart ist, dass vor dem Aufbringen der Befestigungsschicht die Tuftingbahn auf der Rückseite auf die Schmelztemperatur des Polyesters erwärmt wird, um ein Schmelzen des Teils (9) der Schlingen zu verwirklichen, der mit der Bahn in Kontakt steht, um ihre Befestigung zu verwirklichen.

2. Verfahren nach Anspruch 1, **dadurch gekennzeichnet, dass** die Trägerbahn (2) aus einer Mischung aus Einkomponentenfasern aus thermoplastischem Polyester und Zweikomponentenfasern (5) gebildet wird, die mit einem Kern (6) aus thermoplastischem Polyester und einem Mantel (7) aus modifiziertem thermoplastischen Polyester versehen sind, um einen niedrigeren Schmelzpunkt als der Polyester aufzuweisen.

3. Verfahren nach einem der vorhergehenden Ansprüche, **dadurch gekennzeichnet, dass** der Polyester und/oder der modifizierte Polyester der Trägerbahn (2) auf Polyethylenterephthalat (PET) basiert.

4. Verfahren nach einem der vorhergehenden Ansprüche, **dadurch gekennzeichnet, dass** der Polyester der Schlingen (3) auf Polyethylenterephthalat (PET) basiert.

5. Verfahren nach einem der vorhergehenden Ansprüche, **dadurch gekennzeichnet, dass** der modifizierte Polyester der Befestigungsschicht (4) auf Polyethylenterephthalat (PET) basiert.

6. Verfahren nach einem der vorhergehenden Ansprüche, **dadurch gekennzeichnet, dass** die Erwärmung der Rückseite (8) der Tuftingbahn (2) durch Heißkalandrieren erfolgt, wobei der der gegenüberliegenden Seite angeordnete Zylinder auf eine Schmelztemperatur des Polyesters erwärmt wird.

7. Verfahren nach einem der vorhergehenden Ansprüche, **dadurch gekennzeichnet, dass** es ferner die folgenden Schritte umfasst:
• Zuschneiden eines ersten Formats einer Tuftingbahn (2), das mit seiner Befestigungsschicht (4) versehen ist,
• Anordnen des ersten Formats auf einem zweiten Format von Vliesmaterial (11) aus Fasern mit einem Flächengewicht von mehr als 250 g/m², wobei die Befestigungsschicht dem zweiten Format zugewandt ist, wobei das Vliesmaterial aus einer Mischung aus Einkomponentenfasern aus thermoplastischem Polyester und Zweikomponentenfasern (5) gebildet wird, die mit einem Kern (6) aus thermoplastischem Polyester und einem Mantel (7) aus thermoplastischem Polyester versehen sind, der modifiziert ist, um einen niedrigeren Schmelzpunkt als der Polyester aufzuweisen,
• Erwärmen und Pressen der Gesamtheit bei einer Schmelztemperatur des modifizierten Polyesters, um das zweite Format an der Befestigungsschicht zu befestigen,
• Anpassen der Gesamtheit derart zwischen einer Matrize und einem Stempel einer Form nach dem Erwärmen, um eine Matte (1) mit einer dreidimensionalen Geometrie zu erhalten.

8. Verfahren nach den Ansprüchen 6 und 7, **dadurch gekennzeichnet, dass** es ferner beim Kalandrieren die Befestigung eines Films (12) mit einer Schmelztemperatur des modifizierten Polyesters umfasst, wobei der Film auf der Rückseite der Befestigungsschicht (4) angeordnet ist, wobei der Film eine Innenschicht aus thermoplastischem Polyester und zwei Außenschichten aufweist, die auf beiden Seiten der Innenschicht angeordnet sind, wobei die Außenschichten aus modifiziertem thermoplastischem Polyester bestehen, um sich jeweils an der Befestigungsschicht und an der Schicht des Vliesmaterials (11) zu befestigen.

9. Verfahren nach einem der Ansprüche 7 oder 8, **dadurch gekennzeichnet, dass** das Vliesmaterial (11) zwischen 10 und 40 Gew.% Zweikomponentenfaser (5) umfasst.

10. Matte (1) für den Boden eines Kraftfahrzeugs, die durch ein Verfahren nach einem der vorhergehenden Ansprüche hergestellt wird, wobei die Schlingen (3) der Matte an der Trägerbahn (2) durch Erwärmen ihrer Rückseite (8) auf eine Schmelztemperatur des Polyesters befestigt wurden, um ein Schmelzen des Teils (9) der Schlingen zu verwirklichen, der mit der Bahn in Kontakt steht, um ihre Befestigung zu verwirklichen.

## Claims

1. A method for producing a motor vehicle floor mat (1), said method comprising the following steps:
- providing a backing web (2) based on thermoplastic polyester and/or modified thermoplastic polyester fibers,
- stitching loops (3) of thermoplastic polyester-based yarns onto said web so as to produce a tufted web,
- depositing on the reverse side (8) of said tufted web a layer (4) securing said loops to said web, said layer being based on thermoplastic polyester modified so as to have a lower melting point than that of the polyester of said support web, said layer being deposited by extrusion followed by calendering,
said process being such that, prior to the deposition of said fastening layer, said tufted web is heated on said reverse side to the melting temperature of the polyester, so as to melt the part (9) of said loops in contact with said web in order to fasten them.

2. Method according to claim 1, **characterized in that** the support web (2) is formed from a mixture of single-component thermoplastic polyester fibers and two-component fibers (5) provided with a core (6) of thermoplastic polyester and a sheath (7) of modified thermoplastic polyester, so as to have a melting point lower than that of polyester.

3. Process according to one of the preceding claims, **characterized in that** the polyester and/or modified polyester of the support web (2) is based on polyethylene terephthalate (PET).

4. Process according to any of the preceding claims, **characterized in that** the polyester of the loops (3) is based on polyethylene terephthalate (PET).

5. Process according to any of the preceding claims, **characterized in that** the modified polyester of the fixing layer (4) is based on polyethylene terephthalate (PET).

6. Process according to any one of the preceding claims, **characterized in that** the reverse face (8) of the tufted web (2) is heated by hot calendering, the cylinder facing said face being heated to the melting temperature of the polyester.

7. Process according to any one of the preceding claims, **characterized in that** it further comprises the following steps:
- cutting a first format of tufted web (2) provided with its fixing layer (4),
- placing said first format on a second format of non-woven fibrous material (11) with a weight per unit area greater than 250 g/m², said fixing layer facing said second format, said non-woven material being formed by a mixture of single-component thermoplastic polyester fibers and two-component fibers (5) with a core (6) of thermoplastic polyester and a sheath (7) of thermoplastic polyester modified to have a melting point lower than that of polyester,
- heating and pressing the assembly to the melting temperature of the modified polyester, so as to fix said second format to said fixing layer,
- shaping the heated assembly between a die and a punch of a mold to obtain a mat (1) of three-dimensional geometry.

8. Process according to claims 6 and 7, **characterized in that** it further comprises, during calendering, fixing a film (12) at the melting temperature of the modified polyester, said film being arranged on the reverse side of the fixing layer (4), said film having an inner layer of thermoplastic polyester and two outer layers arranged on either side of said inner layer, said outer layers being of modified thermoplastic polyester, so as to be fixed respectively to said fixing layer and to the layer of non-woven material (11).

9. Process according to any one of claims 7 or 8, **characterized in that** the non-woven material (11) comprises between 10 and 40% by weight of bi-component fibers (5).

10. Motor vehicle floor mat (1) produced by a process according to any one of the preceding claims, the loops (3) of said mat having been fixed to the support web (2) by heating its reverse face (8) to the melting temperature of the polyester, so as to achieve melting of the part (9) of said loops being in contact with said web to achieve their fixing.
